# EUROPEAN PATENT APPLICATION

(11) **EP 4 603 423 A1**
(43) Date of publication of application: **20.08.2025**
(21) Application number: 24157854.1
(22) Date of filing: 15.02.2024
(51) Int. Cl.: B65G 29/02, B65G 65/48

(54) **STEP DENSIFYER**

(71) Applicant: Trifilon AB, 611 45 Nyköping (SE)
(72) Inventor: Lidstrand, Martin, 611 67 Nyköping (SE)
(74) Representative: Bergenstråhle & Partners AB

(57) **Abstract**

A feeding apparatus (10) for feeding a material, comprising a feeding space (11), comprising an inlet (12) and an outlet defining a feeding direction of the material therebetween, and a first feeding arrangement (14) and a second feeding arrangement (15) arranged substantially parallel in the feeding space in a direction of a first axis perpendicular to the feeding direction. Each comprises a rotation shaft, extending through the feeding space along the first axis (X) a plurality of feeding members arranged on the rotation shaft, each feeding member comprising a portion extending radially from the rotation shaft. The feeding members of the first feeding arrangement and the feeding members of the second feeding arrangement are arranged on the respective rotation shaft in alternating positions along the first axis such that, during rotation of the first feeding arrangement and the second feeding arrangement in the feeding space, a feeding member of the first feeding arrangement is arranged to pass adjacent a feeding member of the second feeding arrangement.

## Description

### Technical field

The present invention relates generally to transport and feeding of material, specifically continuous feeding of low bulk density materials.

### Background art

In recent years, major developments have been made in the field of material technology aimed at promoting development of sustainable materials to tackle climate change. A focus on plastic products in particular has led to changes in the industry where new, innovative materials are taking an increased share of the market. One such material category are polymeric composites comprising two (or more) distinct phases, wherein one is a polymer phase and the other is a reinforcing phase. Biocomposites are polymeric composites in which the reinforcing phase is an organic material. The organic material may be sourced from various industries such as agriculture or forestry. The common approach to manufacturing the biocomposite is mixing the organic material with a polymer material in a compounding machine, such as a compounding extruder. Commonly, the organic material is an organic fiber, but may also be other materials, for example agricultural waste products, such as rice hulls/husk.

In prior art, there is a problem with transporting the organic material to the compounding machine and feeding the organic material into the compounding machine, due to low bulk density of the organic material. The problem is particularly evident when there is a need to transport and/or feed fiber materials or other materials having a low bulk density. Due to the low bulk density of the material, the movement of the material is less assisted by gravity in vertical sections of a feeding system, that is, the material doesn't "fall". As such, higher demands are put on the equipment for feeding the material.

A contributing problem is related to a phenomenon known as bridging. Bridging occurs when feeding low bulk density materials, specifically for fiber materials or materials with a high entanglement tendency, and causes the material to form a lid, blocking the passage of more material through the feeding system.

There are several prior art solutions available for feeding low bulk density materials. One available method is by means of a vacuum feeder wherein vacuum is utilized to "suck" the material forward in a feeding system. Another method is by means of a feeding screw/screw conveyor. Some solutions, especially suitable for powder materials, comprise feeding chambers with flexible walls, squeezing the material forward. However, there is a lack of solutions suitable for feeding fiber materials such as organic fibers.

Today, there is furthermore a lack of solutions for compacting low bulk density materials, that is, increasing the bulk density. Especially for manufacturing of biocomposites, the organic material needs to be compacted before feeding into the compounding machine.

As such, there is a need for improved solutions for feeding low bulk density material. Furthermore, there is a need for solutions for compacting low bulk density material.

### Summary of invention

An object of the present invention is to overcome at least some of the problems outlined above. It is possible to achieve this object by providing a feeding apparatus and feeding method according to the appended claims.

According to a first aspect of the disclosure, there is provided a feeding apparatus for feeding a material, comprising a feeding space, comprising an inlet and an outlet defining a feeding direction of the material therebetween, and a first feeding arrangement and a second feeding arrangement arranged substantially parallel in the feeding space in a direction of a first axis perpendicular to the feeding direction, wherein the feeding arrangements causes feeding of the material through the feeding space. Each feeding arrangement comprises a rotation shaft, extending through the feeding space along the first axis (X) a plurality of feeding members arranged on the rotation shaft, each feeding member comprising a portion extending radially from the rotation shaft. The feeding members of the first feeding arrangement and the feeding members of the second feeding arrangement are arranged on the respective rotation shaft in alternating positions along the first axis such that, during rotation of the first feeding arrangement and the second feeding arrangement in the feeding space, a feeding member of the first feeding arrangement is arranged to pass adjacent a feeding member of the second feeding arrangement.

The present disclosure provides a novel apparatus for feeding of material. Feeding not only relates to transport of material, but also to applying a force such that the material is forced forward. When force is applied to the material, it is important that the force is applied uniformly and that it is applied to all the material which is to be fed. These effects are provided by the feeding apparatus according to the disclosure. The feeding is performed by two (or more) rotating axes having radial feeding members thereon, which push the material forward as it passes through the feeding space of the apparatus and as such the applied force is divided between the feeding members. The feeding members are arranged in alternating positions to apply an even pressure to the material, and to make sure that no dead areas are created, that is, areas where the material stands still without moving.

By the rotation, the feeding members contact the material from above, and as such the force is applied from above. This provides high control of the direction of the motion.

All of these features provide feeding of the material in the feeding direction and prevents clogging during the feeding of the material.

In one exemplary embodiment, the radially extending portion of each feeding member is longer than half a distance between the rotation shafts of the first feeding arrangement and second feeding arrangement.

One effect of having the extension of the feeding members of the first and second feeding arrangement overlap, is preventing formation of dead areas in the feeding space, that is, areas where the material stands still without moving. Also, the overlap provides a combing effect on the material, which prevents clogging during feeding. This effect is especially apparent when the material being fed is a fiber material.

In one exemplary embodiment, the radially extending portion of each feeding member has a sheet shape, the edge of which comprises an substantially linear feeding side and a curved release side.

The sheet shape of the radially extending portions provides that they may be arranged closely to each other. When the radially extending portions are arranged closely to each other, the space for the material between them is small and thus the force from the feeding members can be more evenly applied to the material. The substantially linear feeding side is arranged to come into contact with the material and push it forward, without hooking onto or damaging the material. The curved release side prevents that the material catches onto the radially extending portions, and thus prevents accidental feeding in a direction opposite the feeding direction.

In one exemplary embodiment, each feeding member comprises two radially extending portions, extending from the rotation shaft in different directions, such as in opposite directions.

By having two (or more) radially extending portions, efficiency of the apparatus is increased.

In one exemplary embodiment, a third feeding arrangement and a fourth feeding arrangement are arranged substantially parallel in the feeding space, wherein the third feeding arrangement and the fourth feeding arrangement are arranged downstream of the first feeding arrangement and the second feeding arrangement in the feeding direction.

By having feeding arrangements provided at two (or more) heights in the feeding direction, the apparatus can be made longer or shorter. As such, feeding can be performed over a longer distance.

In one exemplary embodiment, a distance between the rotation shafts of the first feeding arrangement and the second feeding arrangement, is greater than a distance between the rotation shafts of the third feeding arrangement and the fourth feeding arrangement.

In one exemplary embodiment, walls of the feeding space are tapered, such that a cross-section of the feeding space decreases in the feeding direction.

The decreasing cross-section provides that the material is compressed during feeding. As such, simultaneous feeding and compression is provided. Compression may for example be desired if the material is to be fed into a compound and the bulk volume before insertion into the compounding machine is desired. As such, a more time-efficient and cost-efficient process is provided.

In one exemplary embodiment, the feeding space has a rectangular cross-section.

In one exemplary embodiment, the feeding apparatus is configured to feed a fiber material, preferably comprising organic fibers.

In one exemplary embodiment, the feeding apparatus is a module in a fiber transport system, such as a system for transporting organic fibers.

In a second aspect of the disclosure, there is provided a method for feeding a material in a feeding direction, defined between an inlet and an outlet of a feeding apparatus. The method comprises rotating a first feeding arrangement and a second feeding arrangement arranged substantially parallel in the feeding apparatus in a direction of a first axis (X) perpendicular to the feeding direction, each feeding arrangement comprising a rotation shaft, extending through the feeding space along the first axis (X), a plurality of feeding members arranged on the rotation shaft, each feeding member comprising a portion extending radially from the rotation shaft, wherein the feeding members of the first feeding arrangement and the feeding members of the second feeding arrangement are arranged on the respective rotation shaft in alternating positions along the first axis (X); wherein, during rotation of the first feeding arrangement and the second feeding arrangement in the feeding space, a feeding member of the first feeding arrangement passes adjacent a feeding member of the second feeding arrangement, causing feeding of the material between adjacent feeding members.

In one exemplary embodiment, the method further comprises rotating a third feeding arrangement and a fourth feeding arrangement, arranged downstream of the first feeding arrangement and the second feeding arrangement in the feeding direction, wherein a distance between the rotation shafts of the first feeding arrangement and the second feeding arrangement, is greater than a distance between the rotation shafts of the third feeding arrangement and the fourth feeding arrangement,
wherein said decreased distance provides compression of the material in the feeding direction.

### Brief description of drawings

The invention is now described, by way of example, with reference to the accompanying drawings, in which:
Fig. 1 displays a first embodiment of a feeding apparatus according to the disclosure,
Fig. 2 displays a first embodiment of a feeding apparatus according to the disclosure,
Figs. 3a-3c display an embodiment of a feeding arrangement according to the disclosure,
Fig. 4 displays a second embodiment of a feeding apparatus according to the disclosure.

### Description of embodiments

In the following, a detailed description of a feeding apparatus is provided. In the figures, like reference numerals designate identical or corresponding elements throughout the figures. It will be appreciated that these figures are for illustration only and do not in any way restrict the scope of the present disclosure. When reference is made to directions such as left, right, upper or bottom, this should be understood as directions during operation of the feeding apparatus.

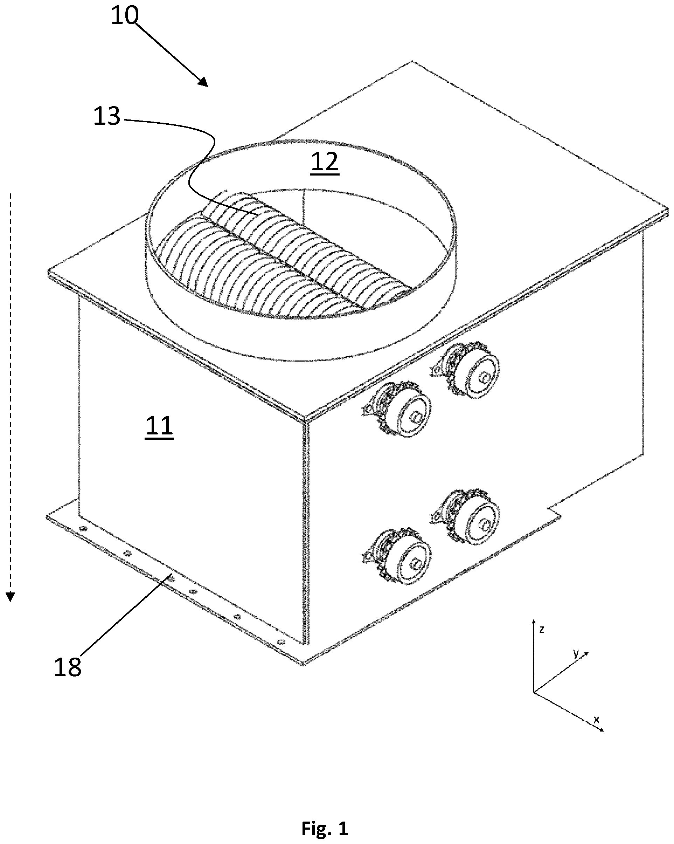

Fig. 1 displays a first embodiment of a feeding apparatus 10 according to the disclosure. The feeding apparatus 10 generally comprises a feeding space 11 and at least two feeding arrangements 13 for feeding a material, such as an organic material, through the feeding space 11. The feeding apparatus 10 is configured to receive a material, transport the material through the feeding space 11 by means of the feeding arrangements 13, and output the material.

To receive the material, the feeding space 11 comprises an inlet 12. In the embodiment displayed in Fig. 1, the inlet 12 is represented by a circular opening in an upper wall of the feeding space 11. To output the material, the feeding space 11 comprises an outlet (not shown) at a bottom of the feeding space 11. The outlet may be a circular opening in a bottom wall of the feeding space 11, similarly to the inlet 12. A feeding direction for the material through the feeding space 11 is defined from the inlet 12 to the outlet. In Fig. 1, a dashed arrow displays the feeding direction. With reference to the cartesian coordinate system is displayed in Fig. 1, the feeding direction lies in the Z-axis.

A feeding arrangement 13 according to the disclosure generally comprises a plurality of feeding members and a rotation shaft. The rotation shaft is configured to rotate in the feeding space 11. The rotation shaft extends through the feeding space 11 in direction perpendicular to the feeding direction. With reference to the cartesian coordinate system is displayed in Fig. 1, a rotation shaft extends in the X-direction.

The feeding apparatus 10 furthermore comprises means for fastening 18 the feeding apparatus 10 to an existing structure such as a material transport system. As such, the feeding apparatus 10 can be arranged as a module in a material transport system. The material transport system may be a system for transporting organic material, fiber material such as an organic fiber material or a fiber material comprising organic fibers, and/or a system for transporting other low bulk density material. The feeding apparatus 10 may for example be fastened to transport ducts of a material transport system.

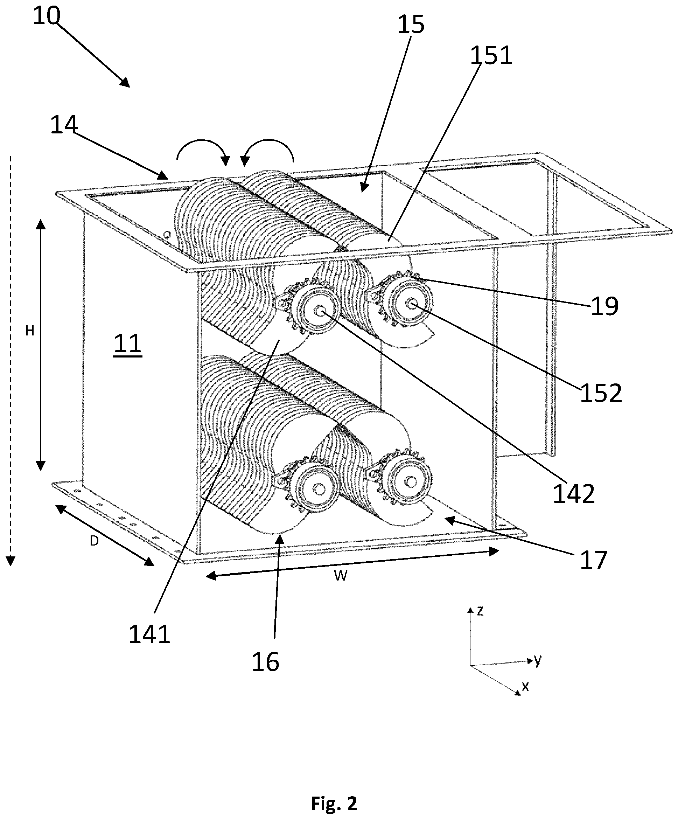

Now turning to Fig. 2, the feeding space 11 comprises four side walls and has the general shape of a cuboid with a rectangular cross section. As such, the feeding space 11 has a depth D, a width W, and a height H. In the embodiment displayed in Fig. 2, the width W is greater than the depth D. With reference to the cartesian coordinate system is displayed in Fig. 2, the depth D lies in the X-axis, the width W lies in the Y-axis, and the heigh H lies in the Z-axis.

In Fig. 2 there is displayed a first feeding arrangement 14 and a second feeding arrangement 15 extending through the feeding space 11. Specifically, the first feeding arrangement 14 and second feeding arrangement 15 extend parallel to each other and preferably parallel to the depth D (in the X-axis) of the feeding space 11. The first feeding arrangement 14 comprises a plurality of feeding members 141 and a rotation shaft 142 and the second feeding arrangement 15 comprises a plurality of feeding members 151 and a rotation shaft 152.

Ends of the rotation shafts extend through apertures in the side walls of the feeding space 11. An end of a rotation shaft extending to an outside of the feeding space 11 may be engaged by a rotation unit 19, for rotation of the rotation shaft.

The first feeding arrangement 14 and second feeding arrangement 15 are configured to, during operation, rotate in opposite directions according to the arrows in Fig. 2. The rotation in opposite directions causes material between the first feeding arrangement 14 and second feeding arrangement 15 to be fed in the feeding direction.

The feeding members 141,151 are arranged on the rotation shafts 142,152. As such, the rotation of the rotation shafts 142,152 causes rotation of the feeding members 141,151. The feeding members 141,151 may be permanently arranged on the rotation shafts 142,152 or releasably arranged. In both cases, the feeding members 141,151 are arranged such that their respective position on the rotation shafts 142,152 is fixed during operation (rotation). Arranging the feeding members 141,151 on the rotation shafts 142,152 may be achieved in several ways, for example welding the feeding members to the rotation shaft, or providing a connecting mechanism. Alternatively, the feeding members may be formed integrally with the rotating shaft.

In Fig. 2, the rotation shafts 142,152 are inserted through mounting holes of a feeding members 141,151 to arrange the feeding members 141,151 thereon. Since the feeding members 141,151 are releasably arranged on the rotation shafts 142,152, the feeding members 141,151 may be removed and exchanged for example if one is damaged or if feeding members of another design is desired. Furthermore, with such an arrangement, the number of feeding members arranged on the rotation shafts 142,152 is flexible, as well as the distance between them.

In Fig. 2, the feeding members 141,151 are arranged at substantially equal distances along a lengthwise extension of the rotation shafts 142,152. In one example, the feeding members 141,151 are arranged at a distance 10-50 mm from each other. In one example, the feeding members 141,151 are arranged at a distance 20-30 mm from each other.

In Fig. 2, the feeding members 141 of the first feeding arrangement 14 and feeding members 151 of the second feeding arrangement 15 are arranged on their respective rotation shaft 142,152 in alternating positions along the X-axis. As such, a feeding member 141 of the first feeding arrangement 14 is arranged to pass adjacent a feeding member 151 of the second feeding arrangement 15. In other words, during operation (rotation), a feeding member 141 of the first feeding arrangement 14 passes between two feeding members 151 of the second feeding arrangement 15, and vice versa, except for the feeding members arranged in end positions. This is applicable for all adjacently arranged feeding arrangements of the feeding apparatus 10 being arranged at the same height.

The feeding apparatus 10 in Fig. 2 furthermore comprises a third feeding arrangement 16 and a fourth feeding arrangement 17. The first feeding arrangement 14 and the second feeding arrangement 15 are arranged at a first height in the feeding space 11 and the third feeding arrangement 16 and the fourth feeding arrangement 17 are arranged at a second height in the feeding space 11 different from the first height. The first height is closer to the inlet 12 and the second height is closer to the outlet. This is equivalent to the third feeding arrangement 16 and the fourth feeding arrangement 17 being arranged downstream of the first feeding arrangement 14 and the second feeding arrangement 15 in the feeding direction. In alternative embodiments, the feeding apparatus comprises feeding arrangements arranged at only one, or more than two different heights in the feeding space. As feeding arrangements can be arranged at more than one height, the feeding apparatus can be made longer or shorter, depending for example on the size of the system or compounder to which it is connected. As such, a flexible and versatile solution is provided.

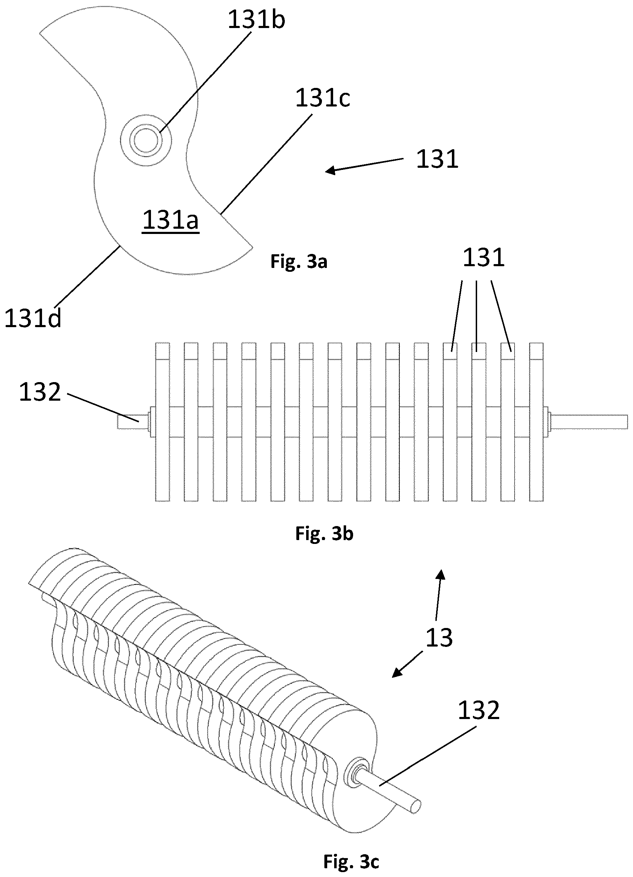

An embodiment of a feeding arrangement 13 and a feeding member 131 are displayed in Figs. 3a-3c. Each feeding member comprises at least one radial portion 131a extending from a core portion 131b. The core portion 131b is arranged to be connected to the rotation shaft 132. As such, when the feeding member 131 is arranged on the rotation shaft 132, the radial portion 131a extends radially from the rotation shaft 132. (Looking at the cartesian coordinate system in for example Fig. 2, a radial portion is thus arranged to rotate in the ZY-plane.)

The radial portion 131a has a sheet shape, meaning that it comprises two major surfaces and an edge connecting them. (Looking at the cartesian coordinate system in for example Fig. 2, the major surfaces extend in the YZ-plane.) In one example, the radial potion has a thickness of 5-15 mm, such as 10 mm.

The edge of the radial portion comprises an substantially linear feeding side 131c and a curved release side 131d.

The substantially linear feeding side 131c is configured to be aligned with the radius of the rotation shaft 132. During operation, the substantially linear feeding side 131c is arranged to face in the direction of rotation. The substantially linear feeding side 131c provides that material is pushed gently forward between two feeding arrangements 13, such as the first feeding arrangement 14 and the second feeding arrangement 15, without hooking onto or damaging the material. As such, the substantially linear feeding side 131c provides feeding in the feeding apparatus 10.

The curved release side 131d is arranged to face opposite the direction of rotation. The curved release side 131d provides that material slides off the feeding members 131 and is not transported opposite the feeding direction, such as up along the walls of the feeding space 11. As such, the curved release side 131d prevents clogging in the feeding apparatus 10.

The radially extending 131a portion has a length (in the radial direction) adapted to be longer than half of a distance between two adjacent rotation shafts 132, such as the rotation shafts of the first feeding arrangement 14 and the second feeding arrangement 15. Having such a length provides that, during operation, the radially extending portions of the first feeding arrangement 14 and the second feeding arrangement 15 overlap.

In the embodiment displayed in Figs. 3a-3c, the feeding member 131 comprises two radial portions 131a. The two radial portions 131a extend in different directions. In Figs. 3a-3c the two radial portions 131a extend in opposite directions from each other. In alternative embodiments, a feeding member can comprise more than two radial portions extending in different directions.

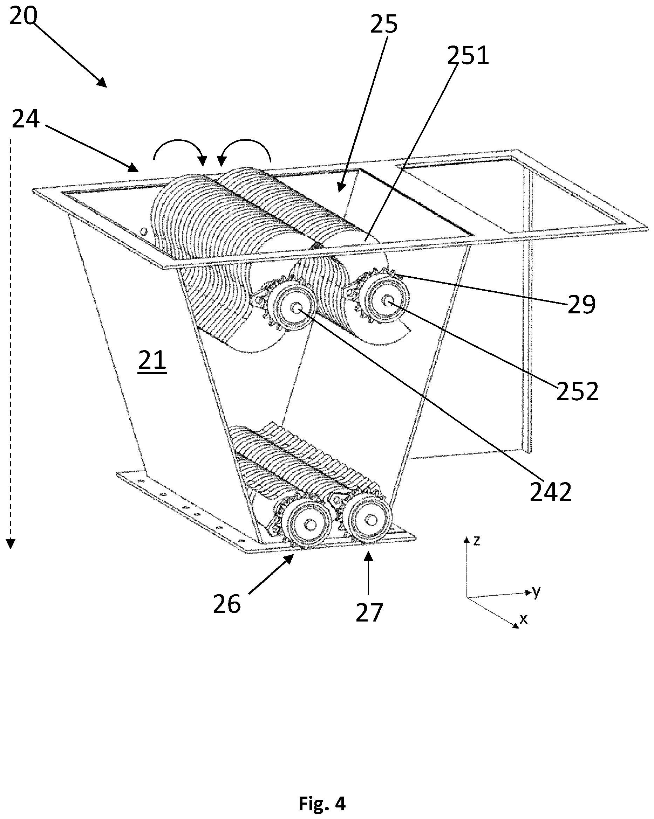

Fig. 4 displays a second embodiment of the feeding apparatus 20. If not stated otherwise, the second embodiment comprises corresponding features to the first embodiment. The embodiment of the feeding apparatus 20 shown in Fig. 4 comprises a first feeding arrangement 24, a second feeding arrangement 25, a third feeding arrangement 26 and a fourth feeding arrangement 27. The first feeding arrangement 24 and the second feeding arrangement 25 are arranged at a first height in the feeding space 21 and the third feeding arrangement 26 and the fourth feeding arrangement 27 are arranged at a second height in the feeding space 21 different from the first height. The first height is closer to the inlet and the second height is closer to the outlet. This is equivalent to the third feeding arrangement 26 and the fourth feeding arrangement 27 being arranged downstream of the first feeding arrangement 14 and the second feeding arrangement 25 in the feeding direction.

In the embodiment displayed in Fig. 4, the side walls of the feeding space 21 are tapered towards the outlet. As such, the area of the cross section of the feeding space 21 decreases in the feeding direction. Specifically, in Fig. 4, the feeding space 21 has the shape of an apex-truncated rectangular pyramid. In alternative embodiments, the feeding space may have other shapes, such as other pyramidal shapes (i.e. with another polygon base than rectangular) or cone shaped (i.e. with a circular base).

The decreasing cross section provides that the material is compressed as it moves in the feeding direction. Specifically, the feeding arrangements feed the material from the inlet to the outlet, and the tapering of the walls compress the material such that, when the material exists the outlet, the volume is decreased compared to when it entered. The compressive forces do not cause compression of the solid particles (such as the fibers) as such, which could be damaging to the material. The compression happens by decreasing the space/distance between the solid particles, that is, decreasing the bulk volume.

In Fig. 4, the first feeding arrangement 24 and the second feeding arrangement 25 are arranged at a distance from each other being greater than a distance between the third feeding 26 arrangement and the fourth feeding arrangement 27. A decreasing distance between rotating shafts in the feeding direction provides that the material is compressed as it moves in the feeding direction. A decreased distance is specifically, but not exclusively, preferred when the walls of the feeding space are tapered.

Preferred embodiments of a feeding apparatus and the operation thereof has been disclosed above. However, a person skilled in the art realises that this can be varied within the scope of the appended claims without departing from the inventive idea.

When reference is made to i.e. a/the feeding arrangement or feeding member or rotation shaft, without specifying first/second/third/fourth, this should be understood as being applicable to any feeding arrangement or feeding member or rotation shaft of the disclosure.

All the described alternative embodiments above or parts of an embodiment can be freely combined or employed separately from each other without departing from the inventive idea as long as the combination is not contradictory.

## Claims

1. Feeding apparatus (10;20) for feeding a material, comprising:
a feeding space (11;21), comprising an inlet (12) and an outlet defining a feeding direction of the material therebetween, and
a first feeding arrangement (14;24) and a second feeding arrangement (15;25) arranged substantially parallel in the feeding space (11;21) in a direction of a first axis (X) perpendicular to the feeding direction, wherein the feeding arrangements causes feeding of the material through the feeding space (11;21), each feeding arrangement comprising:
- a rotation shaft (142,152;242,252), extending through the feeding space (11;21) along the first axis (X),
- a plurality of feeding members (141,151,241,251) arranged on the rotation shaft (132;142,152;242,252), each feeding member (131;141,151;241,251) comprising a portion (131) extending radially from the rotation shaft (132;142,152;242,252),
wherein the feeding members (141;241) of the first feeding arrangement (14,24) and the feeding members (151;251) of the second feeding arrangement (15;25) are arranged on the respective rotation shaft (142,152;242,252) in alternating positions along the first axis (X) such that, during rotation of the first feeding arrangement (14,24) and the second feeding arrangement (15;25) in the feeding space (11;21), a feeding member (141;241) of the first feeding arrangement (14,24) is arranged to pass adjacent a feeding member (151;251) of the second feeding arrangement (15;25).

2. The feeding apparatus (10;20) according to claim 1, wherein the radially extending portion (131a) of each feeding member is longer than half a distance between the rotation shafts (142,152;242,252) of the first feeding arrangement (14,24) and second feeding arrangement (15;25).

3. The feeding apparatus (10;20) according to claim 1 or 2, wherein the radially extending portion (131a) of each feeding member (131;141,151;241,251) has a sheet shape, the edge of which comprises an substantially linear feeding side (131c) and a curved release side (131d).

4. The feeding apparatus (10;20) according to any one of the preceding claims, wherein each feeding member (131;141,151;241,251) comprises two radially extending portions (131a), extending from the rotation shaft (132,142,152,242,252) in different directions, such as in opposite directions.

5. The feeding apparatus (10;20) according to any one of the preceding claims, further comprising a third feeding arrangement (16;26) and a fourth feeding arrangement (17;27) arranged substantially parallel in the feeding space (11;21), wherein the third feeding arrangement (16;26) and the fourth feeding arrangement (17;27) are arranged downstream of the first feeding arrangement (14,24) and the second feeding arrangement (15;25) in the feeding direction.

6. The feeding apparatus (10;20) according to claim 5, wherein
a distance between the rotation shafts (142,152;242,252) of the first feeding arrangement (14,24) and the second feeding arrangement (15;25), is greater than a distance between the rotation shafts of the third feeding arrangement (16;26) and the fourth feeding arrangement (17;27).

7. The feeding apparatus (20) according to any one of the preceding claims, wherein walls of the feeding space (21) are tapered, such that a cross-section of the feeding space (21) decreases in the feeding direction.

8. The feeding apparatus (10;20) according to any one of the preceding claims, wherein the feeding space (11;21) has a rectangular cross-section.

9. The feeding apparatus (10;20) according to any one of the preceding claims, configured to feed a fiber material, preferably comprising organic fibers.

10. The feeding apparatus (10;20) according to any one of the preceding claims, wherein the feeding apparatus (10;20) is a module in a fiber transport system, such as a system for transporting organic fibers.

11. A method for feeding a material in a feeding direction, defined between an inlet (12) and an outlet of a feeding apparatus (10;20), the method comprising:
rotating a first feeding arrangement (14;24) and a second feeding arrangement (15;25) arranged substantially parallel in the feeding apparatus (10;20) in a direction of a first axis (X) perpendicular to the feeding direction, each feeding arrangement comprising:
- a rotation shaft (132;142,152;242,252), extending through the feeding space (11;21) along the first axis (X),
- a plurality of feeding members (131;141,151;241,251) arranged on the rotation shaft (132;142,152;242,252), each feeding member (131;141,151;241,251) comprising a portion (131a) extending radially from the rotation shaft (132;142,152;242,252),
wherein the feeding members (141;241) of the first feeding arrangement (14,24) and the feeding members (151;251) of the second feeding arrangement (15;25) are arranged on the respective rotation shaft (142,152;242,252) in alternating positions along the first axis (X);
wherein, during rotation of the first feeding arrangement (14,24) and the second feeding arrangement (15;25) in the feeding space (11;21), a feeding member of the first feeding arrangement (14,24) passes adjacent a feeding member of the second feeding arrangement (15;25), causing feeding of the material between adjacent feeding members (141,151;241,251).

12. The method according to claim 11, further comprising:
rotating a third feeding arrangement (16;26) and a fourth feeding arrangement (17;27), arranged downstream of the first feeding arrangement (14;24) and the second feeding arrangement (15;25) in the feeding direction, wherein a distance between the rotation shafts (142,152;242,252) of the first feeding arrangement (14,24) and the second feeding arrangement (15;25), is greater than a distance between the rotation shafts (162,172;262,272) of the third feeding arrangement (16;26) and the fourth feeding arrangement (17;27),
wherein said decreased distance provides compression of the material in the feeding direction.
